Europäisches Patentamt

European Patent Office

Office européen des brevets

(19)

(11) Veröffentlichungsnummer: **0 254 014 B1**

(12) **EUROPÄISCHE PATENTSCHRIFT**

(45) Veröffentlichungstag der Patentschrift: **10.04.91**

(51) Int. Cl.⁵: **H02G 5/06**

(21) Anmeldenummer: **87108433.1**

(22) Anmeldetag: **11.06.87**

(54) **Stützisolator.**

(30) Priorität: **24.07.86 CH 2971/86**

(43) Veröffentlichungstag der Anmeldung:
**27.01.88 Patentblatt 88/04**

(45) Bekanntmachung des Hinweises auf die
Patenterteilung:
**10.04.91 Patentblatt 91/15**

(84) Benannte Vertragsstaaten:
**CH DE ES FR IT LI SE**

(56) Entgegenhaltungen:
**DE-A- 2 624 908**

(73) Patentinhaber: **BBC Brown Boveri Aktiengesellschaft**

**CH-5401 Baden(CH)**

(72) Erfinder: **Ehlers, Ralph**
**Bahnhofstrasse 42**
**CH-5430 Wettingen(CH)**
Erfinder: **Ischi, Jürg**
**Hofacherstrasse 10**
**CH-3428 Wiler(CH)**
Erfinder: **Kaiser, Tony, Dr.**
**Rohracherstrasse 5**
**CH-8113 Boppelsen(CH)**
Erfinder: **Larsson, Per Olof**
**Waldeggweg 2**
**CH-5415 Nussbaumen(CH)**
Erfinder: **Plessl, Andreas, Dr.**
**Loorenstrasse 20d**
**CH-5443 Niederrohrdorf(CH)**

## Beschreibung

### Technisches Gebiet

Bei der Erfindung wird ausgegangen von einem Stützisolator mit einem flächenhaften Isolatorkörper und mit mindestens einer zum Führen von Hochspannung vorgesehenen und durch den Isolatorkörper geführten, zylinderförmigen Eingussarmatur mit zwei auf je einer Seite des Isolatorkörpers befindlichen Stirnflächen, von denen mindestens eine Stirnfläche im Inneren eines isoliermittelgefüllten Gehäuses angeordnet ist.

### Stand der Technik

Ein derartiger flächenhafter Stützisolator ist bereits aus der DE-C2-25 26 671 bekannt. Der bekannte, vorzugsweise als Schottisolator zum Trennen zweier Gasräume einer metallgekapselten, gasisolierten Schaltanlage verwendete Stützisolator weist einen aus Kunststoff gegossenen Isolatorkörper auf, in den eine durch den Isolatorkörper geführte,zylinderförmige Eingussarmatur mit ihrer Mantelfläche eingegossen ist. Durch eine vor dem Eingiessen erfolgende Sandstrahlbehandlung der Mantelfläche wird hierbei eine gasdichte Verbindung von Eingussarmatur und Isolatorkörper erreicht. Bei grossen einseitigen Belastungen des Stützisolators, etwa infolge erheblicher unterschiedlicher Gasdrücke in den beiden Gasräumen, lässt sich eine Ablösung des Kunststoffes des Isolatorkörpers von der Eingussarmatur und damit eine Beschädigung des Stützisolators nur mit überdimensionierten und damit aufwendig hergestellten Stützisolatoren mit Sicherheit vermeiden.

### Darstellung der Erfindung

Die Erfindung, wie sie in den Patentansprüchen gekennzeichnet ist, löst die Aufgabe, einen Stützisolator zu schaffen, welcher sich trotz einfacher und kostengünstiger Bauweise auch bei erheblichen einseitigen Belastungen durch eine grosse Betriebssicherheit auszeichnet.

Beim Stützisolator nach der Erfindung werden auf den Isolatorkörper in radialer Richtung wirkende Kräfte an der flexiblen Umrandung der Eingussarmatur reduziert, ohne dass unerwünscht hohe Spannungen im Grenzbereich zwischen Isolatorkörper und Eingussarmatur entstehen. Eine Ablösung des Isolatorkörpers von der Eingussarmatur und damit eine Beschädigung des Stützisolators wird daher auch bei grossen einseitigen Belastungen mit Sicherheit vermieden.

### Kurze Beschreibung der Zeichnungen

Nachfolgend wird die Erfindung anhand von in Zeichnungen dargestellten Ausführungsformen näher erläutert. Es zeigt:

Fig.1    eine Aufsicht auf halbseitig geführte Schnitte durch zwei Ausführungsbeispiele des Stützisolators nach der Erfindung, und

Fig.2    eine Vergrösserung des in Figur 1 punktiert umrandeten Gebiets des im rechten Teil von Fig. 1 dargestellten Stützisolators.

### Weg zur Ausführung der Erfindung

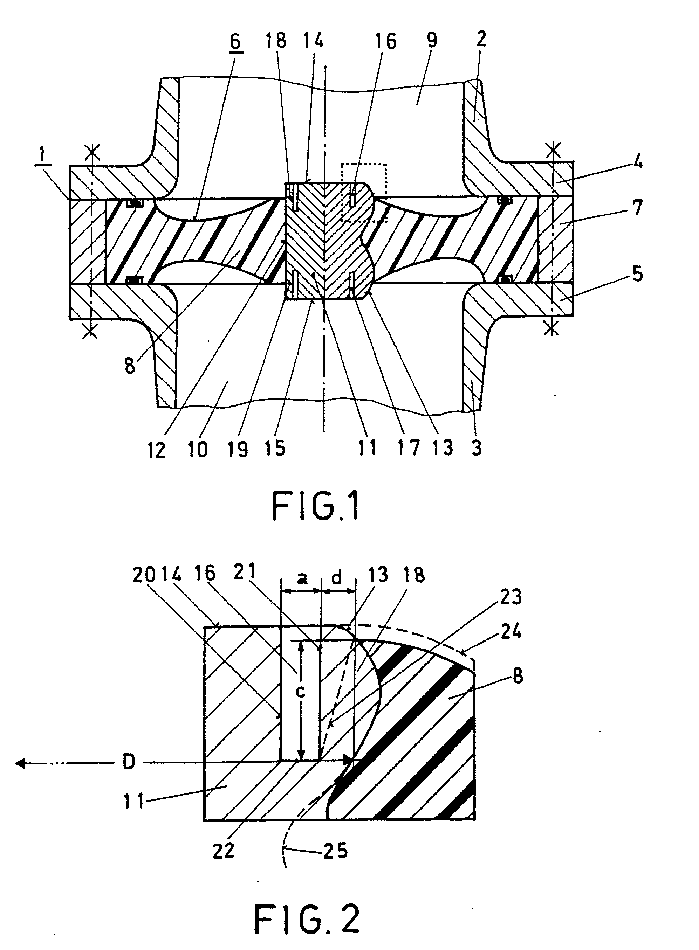

In Fig. 1 bezeichnet 1 ein von zwei rohrförmigen, metallischen Kapselungsteilen 2,3 gebildetes und mit einem Isoliermittel, etwa einem Isoliergas wie beispielsweise Schwefelhexafluorid von bis zu einigen Bar Druck, oder einer Isolierflüssigkeit, wie beispielsweise Oel, gefülltes oder unter Vakuum stehendes Gehäuse. Zwischen den Ringflanschen 4 und 5 ist - wie durch nicht bezeichnete Dichtungen angedeutet ist - in gas-bzw.flüssigkeitsdichter Weise ein scheibenförmiger Stützisolator 6 mit einer seinen Aussenrand bildenden, metallischen Ringarmatur 7, etwa durch Verschrauben, eingespannt. Der Stützisolator 6 weist einen scheibenförmigen Isolatorkörper 8 aus Kunststoff, wie etwa aus gehärtetem Giessharz, auf und schottet zwei Druckräume 9,10 des Gehäuses 1 gasbzw.flüssigkeitsdicht gegeneinander ab. Der Isolatorkörper 8 kann an Stelle einer Scheibenform irgendeine andere flächenhafte Ausgestaltung aufweisen und etwa trichterförmig ausgebildet sein. Der Isolatorkörper 8 trägt mindestens eine Eingussarmatur 11 aus einem elektrisch leitfähigen Material, wie etwa Aluminium oder Kupfer. Diese Eingussarmatur 11 ist im wesentlichen zylinderförmig ausgebildet und weist - wie im linken Teil der Fig. 1 dargestellt ist - etwa eine glatte Mantelfläche 12 auf oder - wie im rechten Teil der Fig. 1 dargestellt ist - eine gewellte Mantelfläche 13. Die Mantelflächen 12 bzw. 13 sind sandgestrahlt und vermitteln daher nach dem Eingiessen der Eingussarmatur 11 eine gute, isoliermitteldichte Haftung des Kunststoffes des Isolatorkörpers 8 auf den Mantelflächen 12 bzw. 13 der Eingussarmatur 11. Die Eingussarmatur 11 führt bei Betrieb des Stützisolators 6 Hochspannung und bildet einen Abschnitt eines durch den Isolatorkörper 8 geführten Hochspannungsleiters.

In den Druckräumen 9 bzw. 10 befinden sich Stirnflächen 14 bzw. 15 der im wesentlichen zylinderförmigen Eingussarmatur 11. In den Stirnflächen 14 bzw. 15 ist jeweils eine koaxial zum Stützisolator 6 angeordnete Ringnut 16 bzw. 17 vorgesehen. Jede dieser Ringnuten 16 bzw. 17 begrenzt jeweils eine auf der zugeordneten Stirnfläche 14 bzw. 15 ansetzende und mindestens einen ringförmigen Teil der Mantelfläche 12 bzw. 13 der Eingussarmatur 11 bildende, rohrförmige Umrandung 18 bzw. 19. Jede dieser Umrandungen 18 und 19 ist zumindest teilweise vom Kunststoff des Isolatorkörpers 8 umgossen.

Die Wirkung eines solchen Stützisolators ist nun wie folgt:

Ist der Stützisolator 6 den seine Bemessung bestimmenden mechanischen Beanspruchungen ausgesetzt, welche etwa hervorgerufen werden können durch Reaktionskräfte, die vom Gehäuse 1 oder der Eingussarmatur 11 auf den Isolatorkörper 8 übertragen werden, oder durch Kräfte infolge einer Druckdifferenz zwischen den beiden Druckräumen 9 und 10, so werden radial am Isolatorkörper 8 angreifende Spannungen abgebaut, ohne dass sich der Kunststoff des Isolatorkörpers 8 von der Mantelfläche 12 bzw. 13 der Eingussarmatur 11 ablösen kann. Dies ist dadurch bedingt, dass der Isolatorkörper 8 im kritischen Randbereich auf der elastisch verformbaren Umrandung 18,19 der im übrigen starren Eingussarmatur 11 haftet und diese sich daher gerade im kritischen Randbereich bei der Einwirkung radialer Spannungen in radialer Richtung elastisch verformen kann.

Damit werden diese Spannungen in einem unkritischen Bereich gehalten. Wirken radiale Spannungen nur auf einer Seite des Stützisolators 6, so kann es ausreichen, wenn eine der Ringnuten 16, 17 nur auf dieser Seite des Stützisolators 6 vorgesehen ist.

Durch geeignete Bemessung der Ringnuten 16,17 können die an verschiedenartig beschaffenen Isolatorkörpern 8 angreifenden radialen Spannungen unterhalb eines kritischen Wertes gehalten werden. Wie in Fig. 2 anhand der vergrössert dargestellten Ringnut 16 ersichtlich ist, können die Ringnuten U-Profil aufweisen und von zwei axial erstreckten, ringförmigen Flanken 20,21 begrenzt sein. Ist die Eingussarmatur 11 aus Aluminium und der Isolatorkörper 8 aus gehärtetem Giessharz, etwa auf der Basis von Epoxidharz, so hat es sich bei einer derartigen Ringnut als vorteilhaft erwiesen, dass die in radialer Richtung erstreckte Breite a der Ringnut 16 etwa zwischen dem 2-4-fachen der Wandstärke d der Umrandung 18 im Bereich des Nutbodens 22 liegt. Hierbei hat es sich ferner als vorteilhaft herausgestellt, die Tiefe c der Ringnut 16 in axialer Richtung etwa zwischen dem 1-4-fachen der Breite a der Ringnut 16 zu erstrecken.

Wie in Fig. 2 gestrichelt dargestellt ist, kann die Ringnut 16 auch eine zur Stirnfläche 14 hin konisch erweiterte äussere Flanke 23 aufweisen. Wie aus Fig. 2 ferner ersichtlich ist, kann der Kunststoff des Isolatorkörpers 8 bis an die Stirnfläche 14 heranreichen (gestrichelte Linie 24), kann aber auch einen Teil der an die Stirnfläche 14 heranreichenden Mantelfläche 13 freilassen.

Wird die Eingussarmatur 11 mit der gewellten Mantelfläche 13 verwendet, so empfiehlt es sich, die innere Flanke der Ringnut 16 derart vorzusehen, dass sie mit der Mantelfläche an deren (in Fig. 2 gestrichelt eingezeichneter engsten Stelle 25 fluchtet. Ein solcher Stützisolator zeichnet sich nicht nur durch ein besonders günstiges mechanisches und elektrisches Verhalten aus, sondern er kann darüber hinaus auch mit denselben Strömen belastet werden wie ein vergleichbarer mit einer Eingussarmatur versehener Stützisolator ohne Ringnuten.

Die die Umrandung 18,bzw. 19 auf deren Innenseite mit der Flanke 21 begrenzende Ringnut 16 bzw. 17 kann auch irgendeine andere in der zugeordneten Stirnfläche 14 bzw. 15 vorgesehene Materialausnehmung sein und etwa Topfform aufweisen.

In jedem Fall soll die Wandstärke d der Umrandungen 18, 19 höchstens 5%, vorzugsweise aber 1 bis 3%, des Durchmessers D der Eingussarmatur 11 betragen. Die in axialer Richtung der Eingussarmatur 11 zwischen dem Boden der Materialausnehmung und der Oberfläche der Isolatorkörpers 8 im Bereich der Anformung der Umrandungen 18, 19 erstreckte Tiefe c der Materialausnehmung soll das 2-10-fache der Wandstärke d betragen.

Hat die Materialausnehmung Topfform, so erstreckt sich die die Umrandung 18 bzw. 19 bildende Topfwand in axialer Richtung der Eingussarmatur 11 über den Topfboden hinweg. Die die Innenseite der Umrandung 18 bzw. 19 bildende innere Topfwand kann entsprechend den äusseren Flanken 21 der Ringnuten 16 bzw. 17 zylinderförmig oder konisch erweitert ausgebildet sein.

Der Stützisolator nach der Erfindung eignet sich in besonders vorteilhafter Weise auch als Wanddurchführung des Gehäuses 1.

## Ansprüche

1. Stützisolator mit einem flächenhaften Isolatorkörper (8) mit mindestens einer zum Führen von Hochspannung vorgesehenen und durch den Isolatorkörper (8) geführten, zylinderförmigen Eingussarmatur (11) mit zwei auf je einer Seite des Isolatorkörpers (8) befindlichen Stirnflächen (14,15), von denen mindestens eine Stirnfläche im Inneren eines isoliermittelgefüllten Gehäuses (1)angeordnet ist, dadurch gekennzeichnet, dass die Eingussarmatur (11) mindestens eine rohrförmige, einen ringförmigen Teil der Mantelfläche (12,13) der Eingussarmatur (11) bildende Umrandung (18,19) aufweist, welche zumindest teilweise vom Isolatorkörper (8) umgossen ist und gegenüber dem verbleibenden Teil der Eingussarmatur (11) in radialer Richtung elastisch leichter verformbar ist.

2. Stützisolator nach Anspruch 1, dadurch gekennzeichnet, dass sich die mindestens eine Umrandung (z.B. 18) auf der grösseren radialen Spannungen ausgesetzten Seite des Stützisolators (6) befindet.

3. Stützisolator nach einem der Ansprüche 1 oder 2, dadurch gekennzeichnet, dass die mindestens eine Umrandung (z.B. 18) an die Eingussarmatur (11) angeformt ist und auf ihrer Innenseite von einer in eine der beiden Stirnflächen (14,15) der Eingussarmatur (11) eingelassenen Materialausnehmung begrenzt ist.

4. Stützisolator nach Anspruch 3, dadurch gekennzeichnet dass die Wandstärke (d) der mindestens einen Umrandung (z.B. 18) im Bereich der Anformung höchstens 5%, vorzugsweise 1 bis 3%, des Durchmessers (D) der Eingussarmatur (11) beträgt.

5. Stützisolator nach Anspruch 4, dadurch gekennzeichnet, dass die in axialer Richtung der Eingussarmatur (11) zwischen dem Boden der Materialausnehmung und der Oberfläche des Isolatorkörpers (8) im Bereich der Anformung der Umrandung (z.B. 18) erstreckte Tiefe (c) der Materialausnehmung das 2-10-fach der Wandstärke (d) beträgt.

6. Stützisolator nach einem der Ansprüche 3-5, dadurch gekennzeichnet, dass die Materialausnehmung als Ringnut (z.B.16) ausgebildet ist und jeweils eine überwiegend in axialer Richtung erstreckte, ringförmige innere und ringförmige äussere Flanke (21) aufweist.

7. Stützisolator nach Anspruch 6, dadurch gekennzeichnet, dass die Breite (a) der Ringnut (z.B. 16) etwa zwischen dem 2-4-fachen der Wandstärke (d) der Umrandung (z.B.18) im Bereich des Nutbodens (22) liegt.

8. Stützisolator nach einem der Ansprüche 6 oder 7, dadurch gekennzeichnet, dass die Mantelfläche (13) gewellt ausgebildet ist und eine mit der inneren Flanke (20) der Ringnut (z.B.16) fluchtende, ringförmig ausgebildete engste Stelle (25) aufweist.

9. Stützisolator nach einem der Ansprüche 3-5,dadurch gekennzeichnet, dass die Innenseite der mindestens einen Umrandung (z.B. 18) zur zugeordneten Stirnfläche (z.B. 18) hin konisch erweitert ist.

**Claims**

1. Post insulator comprising an areal insulator body (8) having at least one cylindrical cast-in fitting (11) which is intended to carry high voltage and passes through the insulator body (8) and having two frontal areas (14, 15) located on one side each of the insulator body (8), of which at least one frontal area is arranged in the interior of a housing (1) filled with insulating agent, characterized in that the cast-in fitting (11) has at least one tubular rim (18, 19) which forms an annular part of the surface area (12, 13) of the cast-in fitting (11) and around which the insulator body (8) is at least partially cast and which is elastically more easily deformable in a radial direction than the remaining part of the cast-in fitting (11).

2. Post insulator according to Claim 1, characterized in that the at least one rim (for example 18) is located on the side of the post insulator (6) which is exposed to the greater radial stresses.

3. Post insulator according to one of Claims 1 or 2, characterized in that the at least one rim (for example 18) is moulded onto the cast-in fitting (11) and is bounded on its inside by a recess in the material recessed into one of the two frontal areas (14, 15) of the cast-in fitting (11).

4. Post insulator according to Claim 3, characterized in that the wall thickness (d) of the at least one rim (for example 18) is 5% at a maximum, preferably 1 to 3% of the diameter (D) of the cast-in fitting (11) in the area where it is moulded on.

5. Post insulator according to Claim 4, characterized in that the depth (c) of the recess in the material, which extends in an axial direction of the cast-in fitting (11) betveen the bottom of the recess in the material and the surface of the insulator body (8) in the area where the rim (for example 18) is moulded on, is 2 - 10 times the wall thickness (d)

6. Post insulator according to one of Claims 3 - 5, characterized in that the recess in the material is constructed as annular groove (for example 16) and has in each case an annular inner and annular outer side (21) which predominantly extends in the axial direction.

7. Post insulator according to Claim 6, characterized in that the width (a) of the annular groove (for example 16) is approximately between 2 - 4 times the wall thickness (d) of the rim (for example 18) in the area of the groove bottom (22).

8. Post insulator according to one of Claims 6 or 7, characterized in that the surface area (13) is of undu-lating construction and has a narrovest point (25) which is of annular construction and is flush with the inner side (20) of the annular groove (for example 16).

9. Post insulator according to one of Claims 3 - 5, characterized in that the inside of the at least one rim (for example 18) is conically widened towards the associated frontal area (for example 18).

**Revendications**

1. Isolateur support avec un corps d'isolateur (8) de type aplati et avec au moins une armature cylindrique scellée (11), passant à travers le corps d'isolateur (8) et prévue pour le passage d'une haute tension, avec deux faces d'extrémité (14, 15) se trouvant respectivement de part et d'autre du corps d'isolateur, dont au moins une est disposée à l'intérieur d'une enceinte (1) remplie d'un agent isolant, caractérisé en ce que l'armature scellée (11) présente au moins un rebord tubulaire (18, 19) formant une partie annulaire de la surface latérale (12, 13) de l'armature scellée (11), qui est noyé au moins partiellement dans le corps d'isolateur (8) et peut aisément se déformer élastiquement en direction radiale par rapport à la partie restante de l'armature scellée (11).

2. Isolateur support suivant la revendication 1, caractérisé en ce qu'au moins un des rebords (p. ex. 18) se trouve sur le côté de l'isolateur support (6) qui est exposé aux plus fortes contraintes radiales.

3. Isolateur support suivant l'une ou l'autre des revendications 1 ou 2, caractérisé en ce qu'au moins un des rebords (p. ex. 18) est formé dans l'armature scellée (11) et est limité, sur son côté intérieur, par un évidement matériel ménagé dans une des deux faces d'extrémité (14, 15) de l'armature scellée (11).

4. Isolateur support suivant la revendication 3, caractérisé en ce que l'épaisseur (d) d'au moins un des rebords (p. ex. 18) vaut, dans la région où elle est formée, au maximum 5 %, et de préférence 1 à 3 %, du diamètre (D) de l'armature scellée (11).

5. Isolateur support suivant la revendication 4, caractérisé en ce que la profondeur (c) de l'évidement matériel, comprise entre le fond de l'évidement matériel et la surface du corps d'isolation (8) dans la direction axiale de l'armature scellée (11), est comprise entre 2 et 10 fois l'épaisseur (d).

6. Isolateur support suivant l'une ou l'autre des revendications 3 à 5, caractérisé en ce que l'évidement matériel a la forme d'une rainure annulaire (p. ex. 16) et présente à la fois un flanc intérieur annulaire et un flanc extérieur annulaire (21), orientés chacun essentiellement en direction axiale.

7. Isolateur support suivant la revendication 6, caractérisé en ce que la largeur (a) de la rainure annulaire (p. ex. 16) est comprise entre environ 2 et 4 fois l'épaisseur (d) du rebord (p. ex. 18) dans la région du fond (22) de la rainure.

8. Isolateur support suivant l'une ou l'autre des revendications 6 ou 7, caractérisé en ce que la surface latérale (13) est ondulée et présente un endroit annulaire le plus étroit (25) qui est en alignement avec le flanc intérieur (20) de la rainure annulaire (p. ex. 16).

9. Isolateur support suivant l'une ou l'autre des revendications 3 à 5, caractérisé en ce que le côté intérieur d'au moins un des rebords (p. ex. 18) s'évase en cône vers la face d'extrémité correspondante (p. ex. 14).

FIG.1

FIG.2